(19) Europäisches Patentamt
European Patent Office
Office européen des brevets

(11) **EP 3 850 915 B1**

(12) **EUROPÄISCHE PATENTSCHRIFT**

(45) Veröffentlichungstag und Bekanntmachung des Hinweises auf die Patenterteilung:
**08.07.2026 Patentblatt 2026/28**

(21) Anmeldenummer: **19779748.3**

(22) Anmeldetag: **13.09.2019**

(51) Internationale Patentklassifikation (IPC):
***H05B 41/30*** *(2006.01)*

(52) Gemeinsame Patentklassifikation (CPC):
**H05B 41/30;** Y02B 20/00

(86) Internationale Anmeldenummer:
**PCT/EP2019/000265**

(87) Internationale Veröffentlichungsnummer:
**WO 2020/052798 (19.03.2020 Gazette 2020/12)**

(54) **VERFAHREN UND ANORDNUNG ZUR BLITZLAMPENSTEUERUNG**

METHOD AND ASSEMBLY FOR FLASH LAMP CONTROL

PROCÉDÉ ET DISPOSITIF DE COMMANDE DE LAMPE-ÉCLAIR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.09.2018 EP 18194343**

(43) Veröffentlichungstag der Anmeldung:
**21.07.2021 Patentblatt 2021/29**

(73) Patentinhaber: **Rovak GmbH**
**01723 Grumbach (DE)**

(72) Erfinder:
• **REICHMANN, Udo**
**01723 Wilsdruff (DE)**
• **OCHLICH, Georg**
**01723 Kesselsdorf (DE)**
• **NEUBERT, Marcel**
**01731 Kreischa (DE)**

(74) Vertreter: **Lippert Stachow Patentanwälte Rechtsanwälte**
**Partnerschaft mbB**
**Königsbrücker Straße 124**
**01099 Dresden (DE)**

(56) Entgegenhaltungen:
**EP-A1- 2 605 623       WO-A1-2009/095584**
**US-A- 4 687 971**

• **THRUM T ET AL: "Development of a powerful vortex stabilized water-wall flash lamp for RTP applications", INDUSTRY APPLICATIONS CONFERENCE, 2004. 39TH IAS ANNUAL MEETING. CONFE RENCE RECORD OF THE 2004 IEEE SEATTLE, WA, USA 3-7 OCT. 2004, PISCATAWAY, NJ, USA,IEEE, vol. 2, 3 October 2004 (2004-10-03), pages 1019 - 1023, XP010735132, ISBN: 978-0-7803-8486-6, DOI: 10.1109/IAS.2004.1348538**

**Beschreibung**

Die Erfindung betrifft ein Verfahren zur Blitzlampensteuerung, welches durch Anlegen einer Elektrodenspannung zwischen die Elektroden einer Blitzlampe ein einen Blitz erzeugender Hauptpuls des Lampenstromes bewirkt und vor der Blitzerzeugung ein Vorpuls des Lampenstromes durch Anlegen einer Vorspannung erzeugt wird.

Die Erfindung betrifft auch eine Anordnung zur Blitzlampensteuerung mit den Merkmalen des Anspruches 5.

Eine Temperung mittels Blitzlampen, auch als FLA bezeichnet (flash lamp annealing), ist ein innovatives Verfahren zur thermischen Vor und- Nachbehandlung mittels Xenon-Lampen im Zeitbereich von wenigen tausendstel Sekunden. Durch die ultra-kurze Prozesszeit werden völlig neue technologische Möglichkeiten eröffnet. Ein wesentlicher Vorteil im Vergleich zu konventionellen Verfahren ist eine örtlich präzise Wärmezufuhr, beschränkt auf den gewünschten Substratbereich, wodurch die Temperaturbelastung des Substrats sinkt und signifikante Energieersparungen realisiert werden.

Die Integration in vorhandene Prozessketten ist aufgrund der kompakten Bauweise nahezu uneingeschränkt gegeben.

Das Prinzip der Blitzlampentemperung beruht auf der pulsartigen Zündung einer beispielsweise mit dem Edelgas Xenon gefüllten Quarzglasröhre, der Blitzlampe. Das dabei emittierte elektromagnetische Spektrum wird durch das Substrat absorbiert und die aufgenommene Energie führt zu einer oberflächennahen Erwärmung für wenige tausendstel Sekunden.

Der Prozess wird durch die Parameter Pulszeit, d.h. die Leuchtdauer der Lampen, und die dem Substrat zugeführte Energiedichte eingestellt und kontrolliert.

Die Elektronik besteht, vereinfacht dargestellt, aus einem gedämpften Schwingkreis, wobei die Pulszeit hauptsächlich durch die Wahl einer Induktivität in dem Schwingkreis und durch die Kapazität eines Kondensators bestimmt wird. Der Kondensator dient als Energiespeicher für die Entladung.

Das Zünden der Lampen erfolgt pulsartig, indem - mit Hilfe eines externen elektrischen Feldes ($E_{ext}$) oder durch eine an den Elektroden erzeugte Spannung - Ladungsträger generiert werden.

Als Puls, z.B. Zündpuls, Hauptpuls, Vorpuls usw. wird hier ein Puls im Verhalten Lampenstromes bezeichnet.

Der Innendurchmesser der Quarzglasröhre beschränkt das Plasmavolumen. Vom Zeitpunkt des Zündvorgangs bis zum Erreichen der maximalen Plasmaausdehnung wächst das Plasmavolumen ebenso pulsartig an (einige μs), wobei in dieser Phase die höchste Beanspruchung der Lampe stattfindet. Bei jedem Blitz werden im Wesentlichen die Elektroden sowie das Quarzglas der Lampen geschädigt. Die Elektrodentemperatur steigt von Raumtemperatur auf mehrere hundert °C an, was zu einer thermischen Belastung der entsprechenden Lampenbauteile führt. Der kritische Parameter ist vor allem die Temperaturänderung der Lampenteilbereiche sowie die Druckerhöhung pro Zeit. Wird ein lampenspezifischer Energieschwellwert (die zugeführte Energie entspricht $E = \frac{1}{2} c U^2$) überschritten, kommt es zur Zerstörung der Elektroden. Die Zerstörung wird erreicht sobald der Stromanstieg (dI/dt) einen zulässigen Wert übersteigt oder wenn der Maximalstrom ($I_{peak}$) einen zulässigen Wert übersteigt. Darüber hinaus führt wiederholtes Blitzen im Normalbetrieb zu einer grundsätzlich nicht vermeidbaren Degradation der Elektroden und somit zu einer begrenzten Lebensdauer der Lampe.

Zur Minderung der Problematik existieren neben der Lampenkühlung auch elektronische Zusatzkomponenten, welche mit Hilfe eines vorgezündeten Plasmas mit wesentlich kleinerer Energie und/oder in kürzerer Zeit (im Vergleich zum eigentlichen Blitz) eine Vorheizung der Elektroden bewirken. Die Elektronik verbessert zudem die zeitliche Reproduzierbarkeit des Zündverhaltens und erhöht die zulässige maximale Stromdichte.

Es ist eine Lösung in einem Produkt der Analog Modules Inc. in Form einer Flashlamp Simmer Supply Model 864 A bekannt, mit der in gepulsten Lasersystemen Blitzlampen in der Zeit zwischen den Hauptentladungspulsen gesimmert werden. Das Simmering ist nichts anderes, als einen Erhaltungs-Strom (50mA bis 10A) in der Lampe zwischen den Pulsen fließen zu lassen. Die wird angewandt, um eine etablierte Leiterbahn in der Blitzlampe zum Zeitpunkt des Hauptentladungspulses vorliegen zu haben, was zu einer geringeren Schwankung der Energie zwischen den Hauptpulsen führt. Weiterhin soll die Lichtbogenausdehnung während des Pulses weniger heftig ausfallen, wodurch die Lampenlebenszeiten verbessert werden. Im Allgemeinen sollen sich sowohl die Stabilität als auch die Lebensdauer der Lampe mit steigendem Simmerstrom verbessern.

Bei dieser Lösung wird ein Plasmafaden (Teilionisation) generiert, welcher allerdings aufgrund der geringen Leistung den Plasmaraum nicht vollständig ausfüllt. Der durch den Simmer erzeugte DC-Strom führt zu einer Vorerwärmung der Elektroden, was zu einer Verbesserung der Reproduzierbarkeit des Zündverhaltens führt. Der angelegte Strom liegt im Mittel bei etwa 0,5 A. Die oben beschriebenen kritischen Zustände (Druckanstieg, Temperaturanstieg, Stromanstieg) werden jedoch durch den Simmer nicht signifikant beeinflusst. Der permanente Ionenbeschuss der Kathode während des Simmerbetriebs führt zu einer Schädigung der Lampe durch das Absputtern von Elektrodenmaterial.

Mit Jia, Shenli et al.: The Plasma Channel of Pulsed Flashlams Working in an Array", Plasma Science and Technology, Vol.15, No. 7; Juli 1013 ist eine Lösung zur Erzeugung eines nachfolgend "Vorpuls" genannten zeitlich limitierten Plasmas bekannt. Dabei kommt ein Kondensator mit einer Kapazität von 4μF zur Anwendung. Die Kapazität des parallel geschalteten Kreises zur Erzeugung des zeitlich verzögerten Hauptpulses ist um den Faktor 19 größer. Da die gleiche Spannung angelegt wird, ist auch die Energie des Hauptpulses um den Faktor der Kapazitäten größer. In der dargestellten Variante wird beschrieben, dass die Vorzündung einen sanfteren Betrieb der Lampe bewirkt, wodurch die mechanische Belastung, verursacht durch Schockwellen, sinkt. Die Vorzündung ermöglicht zudem eine schnellere Entladung des Hauptpulses, da der Plasmawiderstand bei Zündung bereites kleiner unendlich ist. Eine Pulsformung des Vorpulses ist nicht vorgesehen.

Zudem ist deutlich zu erkennen, dass zum Zeitpunkt der Zündung des Hauptpulses das Plasma nicht die maximal mögliche Ausdehnung erreicht hat.

In dem Artikel T. Thrum et al.: Development of a Powerful Vortex Stabilized Water-Wall Flash Lamp for RTP Applications, 0-7803-8486-5/04 IEEE 2004, wird eine Vorzündung bei deutlich höherer Leistung im Vergleich zum Simmer beschrieben. Die Vorzündung erfolgt nicht nur durch die Entladung eines Kondensators, sondern wird mit Hilfe sogenannter IGBTs (Stromversorgungen mittels eines Insulated Gate Bipolar Transistor) generiert. Mit Hilfe einer reinen Kondensatorentladung erfolgt der eigentliche Hauptpuls mit einer zeitlichen Verzögerung. Durch die Dauer der Vorzündung wird ein Zustand erreicht bei dem das Plasma die maximale räumliche Ausdehnung erreicht hat (Strom ca.: 200 bis 800A). Ohne die Vorzündung ist infolge des Hauptpulses ein deutlich höherer Druckanstieg zu erwarten.

Diese Lösung bringt einen relativ hohen Gasverbrauch mit sich, was den Einsatz von Argon anstelle von Xenon wirtschaftlich sinnvoll erscheinen lässt. Der Einsatz von Argon verringert jedoch die Effektivität im Vergleich zu Xenon.

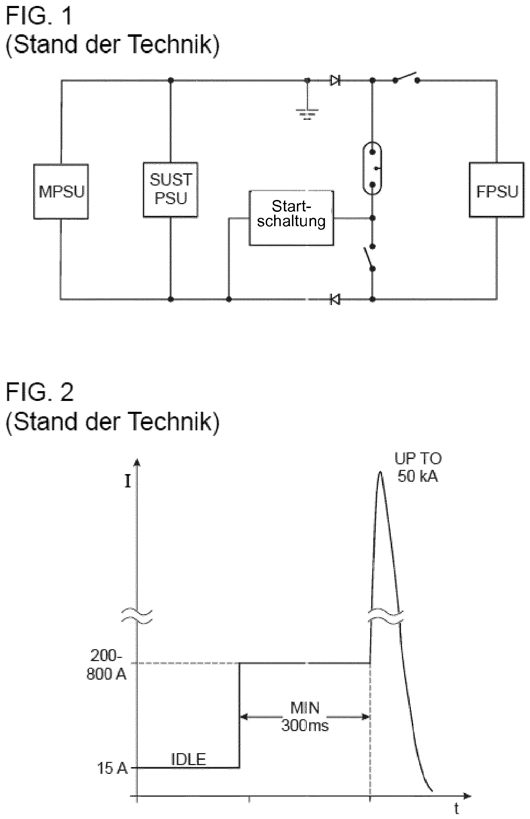

Die verschiedenen Stromversorgungskomponenten sowie die für den Betrieb der Blitzlichtbogenlampe zusammenwirkenden Schutzdioden und Schalter nach dem naheliegendsten Stand der Technik sind in Fig. 1 dargestellt.

Die Blitzlichtbogenlampe wird von drei verschiedenen Stromversorgungen gestartet und betrieben:

Eine Startschaltung (SCCT) als Spannungsvervielfacher zum Anlegen von bis zu 45 kV für den anfänglichen Durchbruch und zur Bereitstellung einer ausreichenden Energie für den Aufbau des Lichtbogenstroms, so dass die Lichtbogenantriebsspannung unter ca. 650 V sinkt und gehalten werden kann durch die Stromversorgung (SUST-Netzteil). Dieses Netzteil ist als Low-Ripple-Konstantstromversorgung zur Versorgung der Bogenlampe mit einem Haltestrom von 15 A ausgelegt.

Die Hauptstromversorgung (MPSU) liefert die gesamte Energie, die zum Betrieb der Lampe über ihrem Blindstrom benötigt wird.

Weiterhin ist eine Blitzentladungs-Stromversorgung (FPSU) an den Stromkreis angeschlossen.

Der typische Betrieb der Blitzlampe ist darin zu sehen, dass nach dem Starten und Aufrechterhalten des Lichtbogens durch die Startschaltung, das Hauptnetzteil die Lichtbogenlampe für mindestens einige hundert Millisekunden auf einen vorbestimmten Stromwert (den sogenannten Vorpuls) hochfährt,

Der Vorpuls ist so lang, dass sich der Druckanstieg während der Plasmaexpansion vor Beginn des Blitzes abbaut. Der transiente Druckanstieg während Vorpulses wird im Vergleich zu einem Blitz, der von der Leerlaufstromphase direkt erzeugt würde, deutlich reduziert, da der Vorpuls den Lampenraum vor dem Blitz mit heißem Plasma füllt, wodurch der prozentuale Temperaturanstieg während des Blitzes reduziert wird. Ein typischer Lichtbogenlampenstrom während des Blitzbetriebs ist in Fig. 2 dargestellt.

Das Vorzünden erfordert in diesem Fall eine sehr kostenintensive Elektronik.

Zudem sind die maximal mögliche Spannung und der maximal mögliche Strom der IGBTs eingeschränkt. Die Energie der Vorzündung ist somit durch die IGBTs limitiert.

Die US 4687 971 A zeigt ein Verfahren zur Blitzlampensteuerung und eine entsprechende Anordnung, bei dem durch Anlegen einer Elektrodenspannung an die Elektroden einer Blitzlampe ein einen Blitz erzeugender Hauptpuls des Lampenstromes erzeugt wird und vor der Blitzerzeugung ein Vorpuls des Lampenstromes durch Anlegen einer Vorspannung erzeugt wird.

Es ist allerdings nur eine Stromquelle zum Laden zweier Kondensatoren vorhanden, wodurch das Laden auf unterschiedliche Spannungswerte nicht möglich ist. Insbesondere kann Vorpuls und Hauptpuls nicht unabhängig geladen werden und es sind auch keine verschiedene Pulsformen oder -dauern möglich, wodurch die jeweilige elektrische Energie (Vor-/Hauptpuls) nicht angepasst werden kann. In dieser Lösung ist eine feste Entladecharakteristik vorgesehen, die ein Nachführen der Spannung, beispielsweise zur Kompensation der Lampenalterung, verhindert. und eine Anpassung an unterschiedliche Anwendung (verschiedene Substratmaterialen) ist ebenfalls nicht möglich. Dies verhindert ebenfalls der grundsätzliche Aufbau der Schaltung, wie oben dargelegt.

Es ist nicht offenbart, dass der Vorpuls dadurch erzeugt wird, dass

- eine zur Vorspannung höhere Plasmaspannung als Elektrodenspannung angelegt wird und durch
- Zündung mittels einer Zündelektrode ein Plasma in der Blitzlampe (1) gezündet und
- mittels der Vorspannung während des Vorpulses gehalten wird.

Auch ist der Vorspannungsquelle nicht rückwirkungsfrei eine eine Plasmaspannung erzeugende Plasmaspannungsquelle parallel geschaltet, deren Wirkung durch die Zündelektrode steuerbar ist, wobei die Plasmaspannung größer als die Vorspannung ist.

Als nächstliegender Stand der Technik wird die in der WO2009/095584 beschriebene Lösung betrachtet. Darin wird ein Verfahren und eine entsprechende Anordnung zur Blitzlampensteuerung beschrieben, bei dem durch Anlegen einer Elektroden an die Elektroden einer Blitzlampe ein einen Blitz erzeugender Hauptpuls des Lampenstromes bewirkt wird. Vor der Blitzerzeugung wird ein Vorpuls des Lampenstromes durch Anlegen einer Vorspannung erzeugt. Dabei wird der Vorpuls dadurch erzeugt, dass durch Zündung mittels einer Zündelektrode ein Plasma in der Blitzlampe gezündet und mittels der Vorspannung gehalten wird.

Die in dieser Druckschrift beschriebene Lösung geht von einem Stand der Technik aus, wobei ein erster Unterschied in einer Standby-Schaltung deutlich wird. Die Standby-Schaltung umfasst ein Schaltmittel, das in Reihe mit der Stromversorgung der Standby-Schaltung geschaltet ist, und eine Schutzdiode, die in Reihe mit dem Schaltmittel und der Stromversorgung der Standby-Schaltung geschaltet ist. Die Schutzdiode kann verhindern, dass elektrische Energie zur Stromversorgung der Standby-Schaltung zurückfließt.

Ein weiterer Unterschied zum Stand der Technik besteht in einer Vorverstärkungsschaltung, die ein Schaltmittel, das in Reihe mit der Stromversorgung des Vorverstärkerschaltkreises geschaltet ist, und eine Schutzdiode, die in Reihe mit dem Schaltmittel und der Stromversorgung des Vorerweiterungsschaltkreises geschaltet ist, umfasst. Die Schutzdiode ist geeignet, den Rückfluss von Energie zur Stromversorgung der Vorerweiterungsschaltung zu verhindern.

Das Ganze wird durch ein Synchronisationsmittel koordiniert.

Die Standby-Schaltung zwischen die Anode und die Kathode der Entladungslampe ist in der Lage, der Entladungslampe kontinuierlich eine Standby-Spannung und einen Stand-by-Strom zuzuführen.

Die Standby-Schaltung beinhaltet eine Stromversorgung, die geeignet ist, die Standby-Schaltung in die Lage zu versetzen, den Strom mit einer entsprechenden Spannung für einen "Simmer"-Betrieb) abzugeben. Damit entspricht die Standby-Schaltung einer Vorspannungsquelle.

Eine Hauptentladungsschaltung ist vorgesehen, die die Erzeugung von kalibrierten und sehr reproduzierbaren Lichtimpulsen ermöglicht.

Die Energie der Hauptentladung kann in einem Kondensator gespeichert und über die separate Hauptstromversorgung geladen werden. Anschließend kann die Energie der Hauptentladung an die Entladungslampe geschaltet werden. Das Gas in der Entladungslampe wird hochgradig stärker ionisiert und erzeugt einen Blitz, wenn die Energie abklingt. Das Gas wird dann gezwungen, in den "Simmer"-Zustand zurückzukehren.

Eine Zündschaltung ist in der Lage, einen elektrischen Zündimpuls an der Zündelektrode der Entladungslampe zu erzeugen, wodurch unter anderem kurz vor und kurz nach den Lichtblitzen ein feiner ionisierter Strom zwischen der Anode Üblicherweise erfolgt ein Energieeintrag in die Blitzlampe nicht über die Zündelektrode. Woher die Energie für den Zündpuls stammt, wird in diesem Stand der Technik nicht offenbart.

Die Aufgabe der Erfindung besteht somit darin, die Belastung einer Blitzlampe bei der Erzeugung eines Hauptpulses durch eine Vorzündung zu minimieren und die Vorzündung zum einen durch eine einfache elektronische Schaltung zu realisieren und andererseits die Vorzündung für weitere Anwendungen nutzbar und vorteilhaft zu gestalten.

Verfahrensseitig wird die Aufgabe durch ein Verfahren der eingangs genannten Art gelöst, dass der Vorpuls dadurch erzeugt wird, dass ein Zündpuls durch eine zur Vorspannung höhere Plasmaspannung als Elektrodenspannung während einer Entladung eines die Plasmaspannung bereitstellenden zweiten Kondensators angelegt wird und durch Zündung mittels einer Zündelektrode ein Plasma in der Blitzlampe gezündet und mittels der Vorspannung aus einem ersten Kondensator während des Vorpulses gehalten wird wobei die Kapazität des zweiten Kondensators mindestens um eine Größenordnung geringer ist als die Kapazität (C1) des ersten Kondensators.

Damit hat das Plasma in der Blitzlampe zum Zeitpunkt des Hauptpulses bereits das maximal mögliche Plasmavolumen erreicht, wobei die Spannung und der Strom durch die Grenzwerte der IGBTS, nicht limitiert sind da keine IGBTS benötigt werden. Die Reproduzierbarkeit der Zündung des Plasmas wird durch die Erzeugung eines Zündpulses mittels der Zündelektrode erreicht. Das eröffnet die Möglichkeit einer genauen zeitlichen Steuerung und damit verbunden auch die Möglichkeit des zeitgleichen Zündens mehrerer parallel angeordneter Lampen.

In einer Ausgestaltung des Verfahrens ist vorgesehen,

- dass die Vorspannung aus einer Vorspannungsquelle mit dem ersten Kondensator als Elektrodenspannung angelegt wird,
- dass parallel zu der Vorspannung, jedoch zur Vorspannungsquelle entkoppelt, als zusätzliche Elektrodenspannung die Plasmaspannung aus einer Plasmaspannungsquelle mit dem zweiten Kondensator angelegt wird,
- dass der Vorpuls erzeugt wird, indem an die Zündelektrode eine den mit der Plasmaspannung erzeugten Zündpuls bewirkende Zündspannung angelegt wird, wobei durch die Plasmaspannung ein Durchbruch bewirkt und durch die Vorspannung gehalten wird.

Üblicherweise wird ein Zünden des Plasmas in der Lampe nicht durch die Vorspannung sondern erst durch das Anlegen einer Plasmaspannung bewirkt. Grundsätzlich ist es möglich, diese Plasmaspannung so hoch zu wählen, dass bereits ein Zünden des Plasmas auch ohne eine externe Zündhilfe erfolgt. Allerdings ist es zweckmäßig, die Plasmaspannung so einzustellen, dass damit allein noch kein Zünden des Plasmas erfolgt, sondern dass die Zündelektrode eingesetzt wird, um erst durch ein Anlegen einer Zündspannung an die Zündelektrode ein Zünden des Plasmas bei angelegter Plasmaspannung zu ermöglichen. Damit wird es möglich genau den Zeitpunkt des Zündens zu bestimmen. Damit wird ein Zündpuls des Lampenstromes bewirkt.

Der Zündpuls erzeugt mit einer vergleichsweise kleinen Kapazität und einer hohen Spannung (vergleichen mit den Vorspannung und Hauptspannung) einen kurzen Boost-Strom.

Das Zünden über eine Zündelektrode hat außerdem einen Vorteil bei dem parallelen Betrieb mehrerer Lampen. Sollen nämlich mehrere Lampen (elektrisch unabhängig) synchron betrieben werden, ist der Zündpuls entscheidend um ein gleichzeitiges Zünden zu realisieren.

In einer Ausgestaltung des Verfahrens ist vorgesehen, dass mittels einer parallel zur Vorspannungs- und Plasmaspannungsquelle jedoch von diesen trennbare Hauptspannungsquelle eine Hauptspannung als Elektrodenspannung zur Erzeugung des Hauptpulses angelegt und der Hauptpuls erzeugt wird, indem an die Zündelektrode eine einen mit der Hauptspannung erzeugten Hauptpuls erzeugende Zündspannung angelegt wird.

Damit wird ersichtlich, dass der Blitz nun aus drei unabhängigen sich überlagernden Teilpulsen besteht - Zündpuls, Vorpuls und Hauptpuls - welche jedoch alle auf je einer Kondensatorentladung beruhen. Damit kann ausschließlich kosteneffiziente und langlebige Elektronik genutzt werden.

Der Vorpuls und der Hauptpuls können unabhängig voneinander abgestimmt werden, d.h. bei Vor- und Hauptpuls können

- die Pulsdauer,
- die Kapazität (C),
- die Induktivität (L),
- die Energie

unabhängig von einander eingestellt werden (es besteht keine Limitierung durch IGBTs). Die Energie des Vorpulses kann dabei auch die Energie des Hauptpulses übersteigen, sofern dies technologisch erforderlich ist, was bei dem dargestellten Stand der Technik nicht möglich ist.

In einer weiteren Ausgestaltung des Verfahrens ist vorgesehen, dass die Hauptspannungsquelle während des Vorpulses von den Elektroden getrennt und nur während Hauptpulses mit den Elektroden verbunden wird.

Damit wird vermieden, dass in der Hauptspannungsquelle gespeicherte Energie bereits beim Vorpuls abgezogen wird.

Mit einer Anordnung der eingangs genannten Art wird die erfindungsgemäße Aufgabenstellung durch die Merkmale des Anspruches 5 gelöst.

Damit besteht die Möglichkeit, die Plasmaspannungsquelle mit der Plasmaspannung aufzuladen, die durch das Anlegen einer Zündspannung an die Zündelektrode ein Zünden des Plasmas bewirkt und dann zu Plasmaerhaltung die Vorspannungsquelle dient. Rückwirkungsfrei wird die Parallelschaltung dadurch, dass Mittel vorgesehen sind, die ein Entladen der Plasmaspannungsquelle in die Vorspannungsquelle verhindern.

In einer Ausgestaltung der Anordnung ist vorgesehen, dass

- die Vorspannungsquelle den ersten Kondensator (1) aufweist, der mit einer den ersten Kondensator aufladenden ersten Ladeeinheit verbunden ist,

- dass die Plasmaspannungsquelle den zweiten Kondensator (5) aufweist, der mit einer den zweiten Kondensator aufladenden zweiten Ladeeinheit verbunden ist, und

- dass die Zündelektrode der Blitzlampe mit einem Zündspannungsgenerator verbunden ist, der durch das Steuersystem steuerbar mit diesem verbunden ist.

Die Funktion ist nun darin zu sehen, dass der erste Kondensator durch die erste Ladeeinheit auf die Vorspannung aufgeladen wird. In gleicher Weise wird der zweite Kondensator durch die zweite Ladeeinheit auf die Plasmaspannung aufgeladen. Die Plasmaspannung ist höher als die Vorspannung. Da die Plasmaspannungsquelle durch die Entkopplung der Vorspannungsquelle parallel geschaltet ist, wird die Plasmaspannungsquelle nicht an die Vorspannungsquelle entladen. D.h. der erste Kondensator kann nicht etwa auf die Plasmaspannung aufgeladen werden. Andererseits liegt damit die Plasmaspannung an den Elektroden der Lampe an.

Wie bereits erwähnt, wird die Plasmaspannung so gewählt werden, dass sie selbst gerade noch nicht in der Lage ist, ein Plasma in der Lampe zu zünden. Erst wenn an die Zündelektrode eine Zündspannung angelegt wird, erfolgt ein Zünden des Plasmas und es kommt zu dem Zündpuls des Lampenstroms. Die vergleichsweise zu dem ersten Kondensator geringe Kapazität des zweiten Kondensators bewirkt, dass der zweite Kondensator während des Zündpulses entladen wird. Damit liegt nunmehr an den Elektroden als Elektrodenspannung die Vorspannung an. Die vergleichsweise große Kapazität des ersten Kondensator bewirkt, dass dieser mit einer großen Ladungsmenge versehen werden kann. Damit wird sichergestellt, dass der Lampenstrom aus dem ersten Kondensator während der gesamten Dauer des Vorpulses fließen kann. Die Vorteile und Nutzungsmöglichkeiten dieses relativ langen Vorpulses wird nachfolgend noch geschildert.

In einer weiteren Ausgestaltung der Anordnung ist vorgesehen, dass die Hauptspannungsquelle einen dritten Kondensator aufweist, der mit einer den dritten Kondensator aufladenden dritten Ladeeinheit verbunden ist.

Die Funktion ist darin zu sehen, dass während des Zündpulses und des Vorpulses die Hauptspannung aus der Hauptspannungsquelle nicht an den Elektroden anliegt. Erst wenn der Hauptpuls gezündet werden soll, wird der Schalter eingeschaltet, wodurch die Hauptspannung als Elektrodenspannung anliegt. Gleichzeitig wird über das Anlegen einer Zündspannung an die Zündelektrode ein Zünden der Lampe bewirkt. Infolge der Hauptspannung und der in dem dritten Kondensator gespeicherte Ladungsmenge wird der Hauptpuls des Lampenstromes hervorgerufen, der den Blitz erzeugt.

Der Steuereingang des Schalters, insbesondere das Gate des Thyristors ist mit der Steuereinheit verbunden. Damit kann ein zeitlich genaues Erzeugen des Blitzes bewirkt werden.

Das zeitlich aufeinander abgestimmte Laden und Zünden kann insbesondere dadurch erfolgen, dass mindestens eine der Ladeeinheiten mit dem Steuersystem durch dieses steuerbar verbunden ist.

Die Entkopplung der Plasmaspannungsquelle gegenüber der Vorspannungsquelle wird dadurch realisiert, dass sowohl die Vorspannungsquelle als auch die Plasmaspannungsquelle über je eine in Flussrichtung gepolte Diode mit einer Elektroden der Blitzlampe verbunden ist.

Dies bewirkt dass die Diode der Plasmaspannungsquelle in durchlässig ist, wenn die Plasmaspannung höher ist als die Vorspannung. Ist der zweite Kondensator entladen, ist die Spannung der Plasmaspannungsquelle nicht mehr höher als die Vorspannung. Damit wird die Diode der Plasmaspannungsquelle gesperrt und die Diode der Vorspannungsquelle öffnet. Als Elektrodenspannung wirkt jetzt die Vorspannung, ohne dass diese über den zweiten Kondensator entladen werden kann.

Die Erfindung soll nachfolgend anhand eines Ausführungsbeispieles näher erläutert werden. In den zugehörigen Zeichnungen zeigt

Fig. 1 eine Anordnung nach dem Stand der Technik,

Fig. 2 einen Verlauf des Lampenstromes mit einem Vorpuls nach dem Stand der Technik,

Fig. 3 eine Anordnung zur Blitzlampensteuerung gemäß der Erfindung,

Fig. 4 eine Darstellung der erfindungsgemäßen Blitzerzeugung mit drei Teilpulsen und

Fig. 5 eine Simulation von Vor- und Hauptpuls sowie des resultierenden Gesamtpulses

Fig. 6 eine Anordnung zur Blitzlampensteuerung mit einer Sekundärschaltung

Fig. 7 ein Diagramm mit dem Stromverlauf mit der Sekundärschaltung und

Fig. 8 ein Diagramm mit einer vergrößerten Darstellung des Stromanstieges.

Die Fig. 1 und 2 wurden bereits bei der Darstellung des Standes der Technik beschrieben.

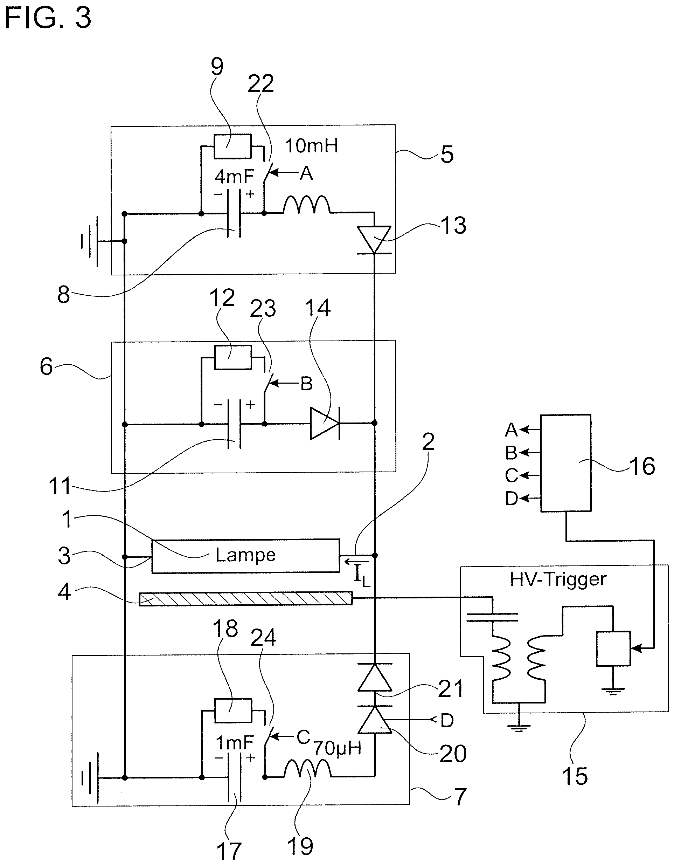

Fig. 3 stellt nun eine Anordnung mit den erfindungsgemäßen Merkmalen dar. Diese weist eine Blitzlampe 1 auf, die mit zwei Elektroden 2; 3 versehen ist. Weiterhin ist eine Zündelektrode 4 vorgesehen, die unmittelbar benachbart zur Blitzlampe 1 angeordnet ist und somit Wirkungsverbindung mit dieser steht, da ein elektrisches Feld an der Zündelektrode 4 auf das Zündverhalten der Blitzlampe 1 Einfluss nehmen kann. Eine solche Zündelektrode kann durch einen einfachen Draht auf der Außenseite des Lampenkörpers oder einen Reflektor o.ä. realisiert werden.

Zwischen den Elektroden 2 und 3 ist eine Elektrodenspannung anlegbar, die gemäß der Erfindung als Plasmaspannung, Vorspannung oder Hauptspannung gestaltet werden kann. Demensprechend ist eine eine Vorspannung erzeugende Vorspannungsquelle, eine eine Plasmaspannung erzeugende Plasmaspannungsquelle sowie eine eine Hauptspannung erzeugende Hauptspannungsquelle 7 vorgesehen.

Die Vorspannungsquelle 5 weist einen ersten Kondensator 8 auf, der mit einer den ersten Kondensator 8 aufladenden ersten Ladeeinheit 9 verbunden ist. Der erste Kondensator 8 bildet zusammen mit einer ersten Induktivität 10 einen Schwingkreis.

Die Plasmaspannungsquelle 6 weist einen zweiten Kondensator 11 auf, der mit einer den zweiten Kondensator 11 aufladenden zweiten Ladeeinheit 12 verbunden ist.

Die Kapazität $C_2$ des zweiten Kondensators 11 ist mindestens um eine Größenordnung geringer ist als die Kapazität $C_1$ des ersten Kondensators 8.

Die Plasmaspannungsquelle 6 ist zu der Vorspannungsquelle 5 über eine erste Entkopplung parallel geschaltet. Durch diese erste Entkopplung wird die Parallelschaltung rückwirkungsfrei. Diese erste Entkopplung weist eine erste Diode 13 auf, die in Reihe mit dem ersten Kondensator 8 und der ersten Induktivität 10 liegt und in Flussrichtung des zur Blitzlampe 1 fließenden Lampenstromes $I_L$ gepolt ist. In gleicher Weise weist die erste Entkopplung eine zweite Diode 14 auf, die in Reihe mit dem zweiten Kondensator 11 liegt und ebenfalls in Flussrichtung des zur Blitzlampe 1 fließenden Lampenstromes $I_L$ gepolt ist.

Die zweite Ladeeinheit 12 lädt den zweiten Kondensator auf die Plasmaspannung auf, die so hoch gewählt wird, dass ein reproduzierbares Zünden erfolgt, vorzugsweise höher liegt, als die Vorspannung, mit der der erste Kondensator 8 aufgeladen ist. Damit liegt an der Kathode der ersten Diode 13 eine höhere Spannung an, als an ihrer Anode und sie sperrt. Dagegen ist die zweite Diode 14 in Durchlass, da an ihrer Anode eine höhere Spannung anliegt als an ihrer Kathode.

Ist der zweite Kondensator entladen, ist seine Spannung kleiner als die Vorspannung und die zweite Diode 14 sperrt und die erste Diode 13 ist in Durchlass.

Die Wirkung der Plasmaspannungsquelle 6 ist durch die Zündelektrode 4 steuerbar. Hierzu ist die Zündelektrode mit einem Zündspannungsgenerator 15 verbunden, der durch ein Steuersystem 16 steuerbar mit diesem verbunden ist.

Die Hauptspannungsquelle 7 weist einen dritten Kondensator 17 auf, der mit einer den dritten Kondensator 17 auf Hauptspannung aufladenden dritten Ladeeinheit 18 verbunden ist. Der dritte Kondensator 17 bildet mit einer zweiten Induktivität 19 einen Schwingkreis.

Die Hauptspannungsquelle 7 ist über eine zweite Entkopplung mit den Elektroden 2 und 3 verbunden. Die zweite Entkopplung besteht aus einem Thyristor 20 und einer dritten Diode 21. Über den als Schalter wirkenden Thyristor 20 ist die die Hauptspannungsquelle 7 von dem Steuersystem 16 steuerbar.

Auch die Ladeeinheiten 9; 12 oder 18 können mit dem Steuersystem 16 durch dieses steuerbar verbunden sein. Wie durch die Schalter 22; 23 und 24 symbolisiert, können sie zu bestimmten Zeitpunkten von dem Steuersystem 16 abgeschaltet werden, beispielsweise die erste Ladeeinheit 9 und/oder die zweite Ladeeinheit 12 während der Erzeugung des Hauptpulses.

Eine Steuerung ist allerdings nicht zwingend erforderlich, wenn die Ladeeinheiten den Zeitpunkt des Blitzes selbständig erkennen oder sobald die Spannung den Sollwert erreicht hat.

Die Zuordnung der Steuereingänge der Schalter 20; 22; 23 und 24 zu dem Steuersystem 16 ist durch die Buchstaben A bis D symbolisiert.

Die Funktion der Anordnung ist nun darin zu sehen, dass die Vorspannung aus der Vorspannungsquelle 5 mit dem ersten Kondensator 8 und seiner ersten Kapazität C1 als Elektrodenspannung angelegt wird. Parallel zu der Vorspannung, jedoch - wie oben beschrieben, zur Vorspannungsquelle rückwirkungsfrei - wird die Plasmaspannung aus der Plasmaspannungsquelle 6, d.h. aus dem aufgeladenen zweiten Kondensators 11 mit seiner zweiten Kapazität $C_2$, die mindestens um eine Größenordnung geringer ($C_2 \ll C_1$) als die erste Kapazität $C_1$ ist, als zusätzliche Elektrodenspannung angelegt wird. Die Elektrodenspannung entspricht nun der Plasmaspannung, die deutlich höher als die Vorspannung ist.

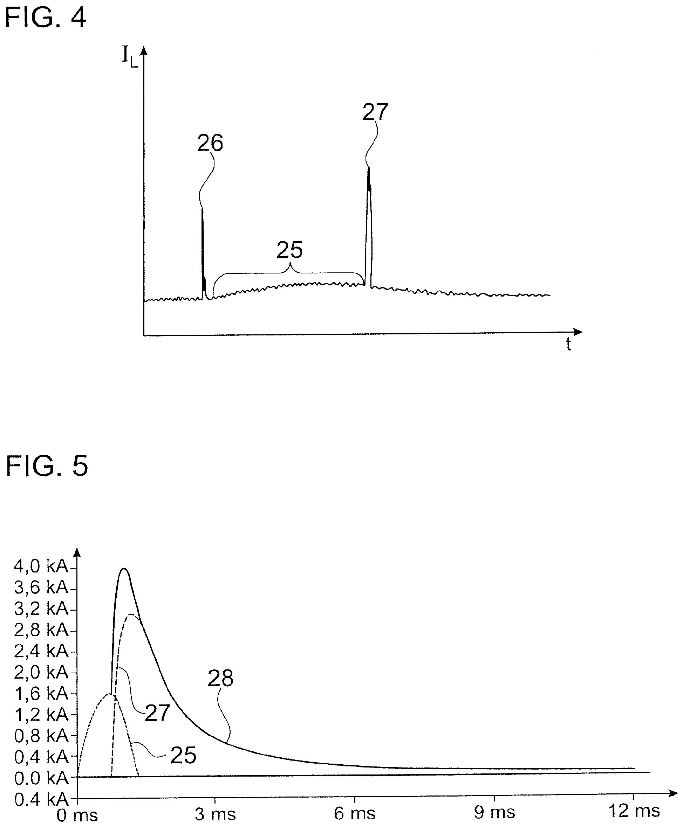

Der in Fig. 4 dargestellte Vorpuls 25 wird nun dadurch erzeugt, dass eine zur Vorspannung höhere Plasmaspannung als Elektrodenspannung angelegt wird und durch Zündung mittels der Zündelektrode 4 ein Zündpuls des Lampenstroms $I_L$ erzeugt wird, wodurch ein Plasma in der Blitzlampe 1 gezündet und mittels der Vorspannung während des Vorpulses 25 gehalten wird. Am Ende des Zündpulses 26 ist der zweite Kondensator 12 mit seiner kleinen Kapazität entladen. Seine Funktion der Bereitstellung einer initial hohen Plasmaspannung ist erfüllt.

Durch die parallel zur Vorspannungsquelle 5 und Plasmaspannungsquelle 6, jedoch von diesen trennbare Hauptspannungsquelle 7 wird während des Vorpulses 25 eine Hauptspannung als Elektrodenspannung zur Erzeugung des Hauptpulses 27 angelegt. Der Hauptpuls 27 wird erzeugt, indem durch den Kondensator 17 durch Schalten des Thyristors 20 eine den Hauptpuls 27 erzeugende Hauptspannung angelegt wird.

Analog zu den bereits beschriebenen Konzepten des Standes der Technik wird ein Plasma vor dem eigentlichen Blitz gezündet. Zusätzlich zum Schwingkreis des eigentlichen Blitzes (Hauptpuls) wird ein weiterer Schwingkreis (unabhängig hinsichtlich sämtlicher Parameter) parallel geschalten, welcher zur Erzeugung eines Vorpulses 25 dient. Das Plasma hat zum Zeitpunkt des Hauptpulses 27 bereits das maximal mögliche Plasmavolumen erreicht.

Ein dritter Parallelkreis des Zündspannungsgenerators 15 unterstützt die Reproduzierbarkeit der Zündung des Vorpulses 25, welche durch die Zündelektrode 4 erfolgt. Der Zündpuls 26, erzeugt mit der vergleichsweise kleinen Kapazität $C_2$ und einer hohen Spannung (vergleichen mit den sonstigen Kreisen) einen kurzen Boost-Strom. Sollen mehrere Lampen (elektrisch unabhängig) synchron betrieben werden, ist der Zündpuls entscheidend um ein gleichzeitiges Zünden zu realisieren.

Wie in Fig. 2 dargestellt, besteht der Blitz nun aus drei unabhängigen sich überlagernden Teilpulsen, welche jedoch alle auf einer Kondensatorentladung beruhen. Damit kann ausschließlich kosteneffiziente und langlebige Elektronik genutzt werden.

In Abhängigkeit von der Lampenlänge bzw. von dem Lampendurchmesser treten wesentliche Änderungen des Plasmawiderstandes auf. Erst durch die freie Kombination der elektrischen Parameter (I und Induktivität (L) 10 und 19) von Vorpuls 25 und Hauptpuls 27 kann der Gesamtblitz optimal erfolgen.

In Fig. 5 ist der Lampenstrom bei dem Vorpuls 25 in einer gepunkteten Linie, bei dem Hauptpuls 27 in einer gestrichelten Linie und die Addition 28 beider in einer ausgezogenen Linie dargestellt.

Bei der Darstellung gemäß Fig. 5 sind die Kapazitäten entsprechend so eingestellt, dass die Entladung vollständig bei idealen Stromverläufen (hinsichtlich Lampenbelastung) erfolgt. Besonders bei langen Lampen (großer Plasmawiderstand) ist die Dämpfung des Schwingkreises sehr hoch (lange Zeit, Kondensator entlädt nicht vollständig). Um die Dämpfung zu reduzieren, kann die Kapazität verkleinert oder/ und die Induktivität erhöht werden (Höhere Induktivität bedingt jedoch eine längere Pulsdauer). Eine kleinere Kapazität bedeutet wiederum eine geringere Energie bei gleicher Spannung. Um dem entgegen zu wirken, muss die Spannung erhöht werden, was technisch die Bauteilvielfalt und Sicherheit der Anlagen einschränkt und wirtschaftlich höhere Kosten verursacht. Ziel ist es somit, bei moderaten Spannungen ausreichend Energie zuführen zu können.

Wie aus Fig. 5 weiterhin ersichtlich, ist die Energie des Vorpulses 25 auf die Energie des Hauptpulses 27 abgestimmt.

Bei zu geringer Energie des Vorpulses 25 würde beispielsweise die Lampe zerstört werden (Druckanstieg und Stromanstieg zu hoch). Die Blitzlampe 1 hat zum Zeitpunkt der Erzeugung des Hauptpulses 27 bereits nahezu den minimalen Widerstand erreicht, was die Dämpfung des Hauptpulses 27 reduziert bzw. die Pulszeit verkürzt (gegenüber ohne Vorpuls 25). Die Abstimmung der elektronischen Parameter ist zwingend notwendig für den Betrieb in der dargestellten Variante. Falsch abgestimmte Netzwerke würden beispielsweise zum Erlöschen des Plasmas führen, obwohl die Kondensatoren noch nicht wesentlich entladen sind.

Darüber hinaus existieren durch die Erfindung bisher nicht realisierte technologische Möglichkeiten, welche im Folgenden beschrieben werden.

Durch eine geschickte Kombination von Vor- und Hauptpuls kann ein durch die Blitzlampe oder eine Blitzlampen-Mehrfachanordnung ein bestrahltes Substrat zweistufig erwärmt werden, jedoch innerhalb nur eines Pulses.

Damit kann die Vorheizung, wie sie beispielsweise durch IR-Strahler bekannt ist, vollständig oder teilweise entfallen. Die Vorheizung dient im Wesentlichen zum Erreichen eines notwendigen Temperaturhubs, wobei die Zerstörung des Substrats verhindert wird.

Eine Reduktion der Konventionellen Vorheizung durch die Erfindung mindert das thermische Gesamtbudget und unterdrückt beispielsweise Diffusionsprozesse im Substrat oder Substratschichten.

Darüber hinaus können in Verbindung mit einer konventionellen Vorheizung durch den zweistufigen Puls höhere Maximaltemperaturen realisiert werden. Dadurch lassen sich neuartige Materialien herstellen, welche mit den bisherigen Verfahren nicht realisierbar sind.

Eine weitere Ausgestaltungsmöglichkeit bei Nutzung der Erfindung ist die Kombination von zwei Blitzlampenfeldern, eins von der Substratrückseite und eins von der Substratoberseite. Der Vorpuls wird für beide Lampenfelder synchron angewandt. Darüber hinaus erfolgt von der Oberseite zusätzlich die Zündung des Hauptpulses.

Mit dieser Art der Anwendung wird das Substrat effektiv von beiden Seiten vorgeheizt (Reduktion des thermischen Stresses) wobei die Oberseite zusätzlich mit einem kurzen Hauptpuls auf die geforderte Zieltemperatur gebracht wird.

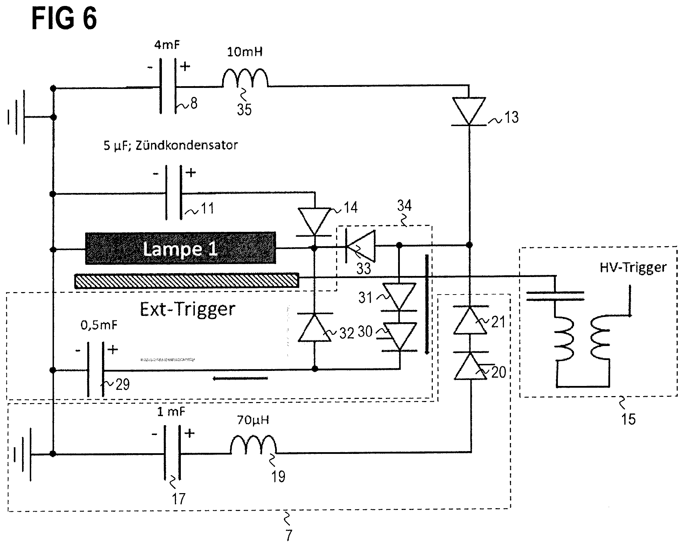

In einem weiteren Ausführungsbeispiel bleibt das Grundprinzip der bisherigen Anordnung bestehen und wird im Folgenden als Primärschaltung bezeichnet. Wie in Fig. 6 dargestellt, besteht die Erweiterung aus einem Zusätzlichen vierten Kondensator 29, vorzugsweise mit einer Kapazität im Bereich von 100μF-2000μF, sowie einem zweiten Thyristor 30 und einer vierten Diode 31, einer fünften Diode 32 und einer sechsten Diode 33. Die Erweiterung wird im Folgenden als Sekundärschaltung 34 bezeichnet. Darin ist der vierte Kondensator 29 in Reihe mit der der fünften Diode an die Elektrode 2 geschalten. In die Leitung zur Elektrode 2 wird die sechste Diode 33 eingefügt, mit deren Anode eine parallel zur vierten Diode 31 liegende Reihenschaltung aus vierter Diode 31 und zweitem Thyristor verbunden ist.

Die wesentlichen Elemente erster Kondensator 8, Spule 35 und Blitzlampe 1 bleiben erhalten und bilden weiterhin einen Schwingkreis. Der Puls wird geformt (Stromkurve) durch die Induktivität I der Spule 35 , der Kapazität C des ersten Kondensators 8 und den Widerstand R der Blitzlampe 1. Die Erhöhung der Kapazität C und des Widerstands R führt zu einer Dämpfung des Schwingkreises, die Erhöhung der Induktivität I wirkt dem entgegen. Das von der Blitzlampe 1 emittierte Spektrum sowie der Wirkungsgrad der Blitzlampe 1 (Umwandlung elektrische $\mathtt{Energie} = \frac{c}{2} \cdot U^2$ in elektromagnetische Strahlung) wird im Wesentlichen beeinflusst durch den Strom $I_L$, welcher durch die Blitzlampe 1 fließt. Es wird hier davon ausgegangen, dass sämtliche weitere Faktoren zur Beeinflussung der Ausbeute bereits optimal gewählt wurden. Eine zu hohe Dämpfung bewirkt einen verlängerten Entladevorgang, was einen nicht-optimalen Stromverlauf zur Konsequenz hat; d.h. die Pulszeit wird verbreitert und es fließt ein zu geringer Strom (im Hinblick auf dem Wirkungsgrad). Aus diesem Grund kann u.a. die Kapazität C des Kondensators 8 nicht beliebig hoch gewählt werden.

Beim Betrieb der Blitzlampe 1 erreicht der Plasmadurchmesser den inneren Durchmesser der Quarzglasröhre, welcher das Plasma begrenzt. Bis dieser Grad der Ausdehnung des Plasmas erreicht ist, wird die der Blitzlampe 1 zugeführte Energie zur Erzeugung des Plasmas benötigt (keine Ausbeute in Form von elektromagnetischer Strahlung). Aus diesem Grund kann der Durchmesser der Blitzlampe 1 nicht beliebig groß gewählt werden. Der Widerstand der Blitzlampe kann durch

$$ K = 1{,}28 \cdot l \cdot \left(\frac{p}{g}\right)^2 \cdot \frac{1}{d(t)} $$

vereinfacht angegeben werden, wobei folgende Bezeichnungen verwendet werden:

*K*     Blitzlampenimpedanz
*p*     Fülldruck
*l*     Lampenlänge

$d(t)$     zeitabhängiger Plasmadurchmesser
$g$     gasartabhängige Konstante

Zum Zeitpunkt der maximalen Plasmaausdehnung wird die Formel vereinfacht mit $d(t) = d_{quarz}$:

$$K^* = 1{,}28 \cdot l \cdot \left(\frac{p}{g}\right)^2 \cdot \frac{1}{d_{quartz}}$$

Der Widerstand steigt bei Erhöhung des Fülldrucks, der Widerstand sinkt mit der Erhöhung des Innendurchmessers der Quarzglasröhre. Der Fülldruck und der Innendurchmesser der Quarzglasröhre werden optimal gewählt.

Eine Erhöhung der Lampenlänge bewirkt ebenfalls ein Ansteigen des Widerstandes.

Zur Vergrößerung der Anwendungsbreite besteht der Bedarf, längere Blitzlampen einzusetzen. Mit steigender Lampenlänge vergrößert sich jedoch der Widerstand des Lampenplasmas, ohne eine entscheidende Einflussmöglichkeit zur Gegenwirkung. Der Wert ist durch die Lampengeometrie definiert. Zudem muss bei einer größeren Lampenlänge mehr Energie bereitgestellt werden, um die entsprechend notwendige Energiedichte zu erzeugen. Die Erhöhung der Spannung ist aus Kostengründen auf 5kV limitiert. Die Energieerhöhung wird daher zudem durch eine Kapazitätserhöhung in der Primärschaltung erreicht, um die Energie zu erhöhen. Dies führt jedoch zu einer stärkeren Dämpfung des Schwingkreises.

Zum Zeitpunkt der Zündung besitzt die Blitzlampe einen unendlich großen Widerstand, welcher durch Generation von Ladungsträgern auf einen lampenabhängigen Minimalwert $K^*$ absinkt. Der Strom erzeugt durch die Entladung des Kondensators 8 ist hauptsächlich durch den Lampenwiderstand limitiert bzw. korreliert mit der Lampenimpedanz $K^*$ in oben dargestellter Abhängigkeit. Bei längeren Lampen (größerer Widerstand) führt dies zu einer Teilentladung des Kondensators 8, bis zum bevorzugten Zeitpunkt der Zündung des Thyristors 20. Aufgrund der Restladung des Kondensators 8 kommt es ebenfalls zu einer Teilentladung des Kondensators 17, bei Erreichen der Restspannung von Kondensator 8 und der Thyristor erlischt, da kein Potentialunterschied und kein Stromfluss auftritt. Die Kondensatoren 8 und 17 werden nicht reproduzierbar entladen bzw. nur teilentladen.

Die Erweiterung mit der Sekundärschaltung 34 lässt die Funktion der Elemente 4, 6 und 15 zur Zündung des Plasmas unberührt.

Nach dem Zündvorgang entlädt sich zunächst der Kondensator 8, indem ein Strom durch die Blitzlampe 1 fließt und darüber hinaus der zusätzliche vierte Kondensator 29 der Sekundärschaltung 34 geladen wird. Mit der Erweiterung erhöht sich der Entladestrom bzw. die vollständige Entladung des ersten Kondensators 8 wird in kürzerer Zeit erreicht. Somit ist zu einem kürzeren Zeitpunkt die Zündung des Thyristors 20 bei vollständig entladenem Kondensator 8 möglich. Die Energie des ersten Kondensators 8 wird somit zwischengespeichert, wobei die Entladung des vierten Kondensators 29 der Sekundärschaltung 34 zeitlich mit der Entladung des Kondensators 17 erfolgt.

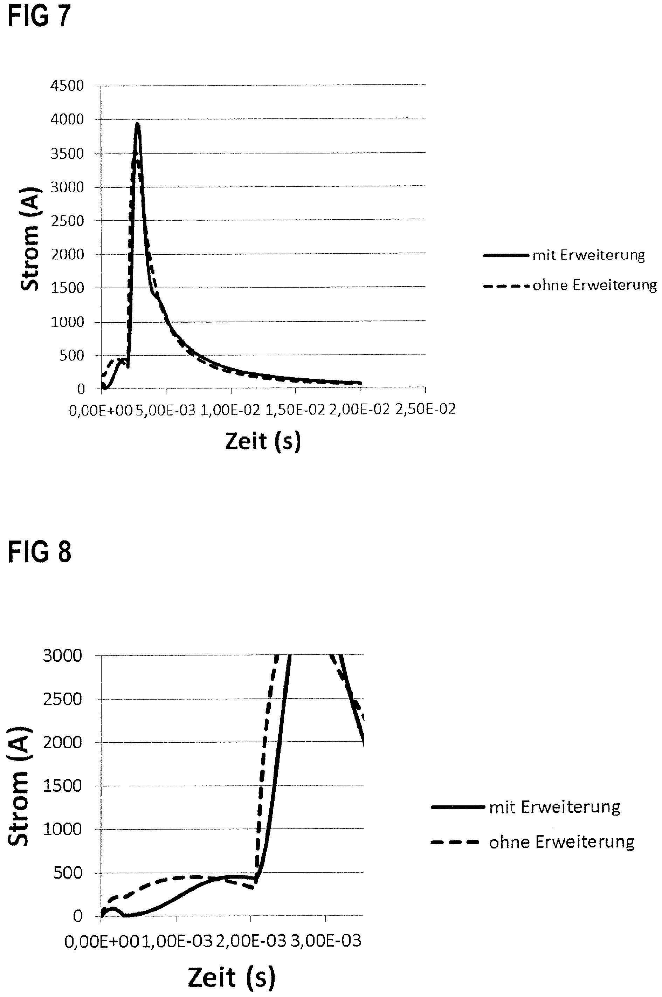

Die aus den Diagrammen gemäß Fig. 7 und 8 ersichtlichen resultierenden Vorteile der Sekundärschaltung 34 sind

a) ein höherer Peakstrom (1),
b) ein geringerer Stromanstieg (Lampenstrom) während der Entladung des Kondensators 8,
c) eine vollständige Entladung (3) beider Kondensatoren und
d) eine kürzere Pulsbreite (4) / höherer Peakstrom.

Zu a)

Die Lampe besitzt einen optimalen Arbeitspunkt hinsichtlich des Stromes. Je höher der Strom desto größer der Wirkungsgrad (Umwandlung von elektrischer Energie in Strahlungsenergie) und desto größer der UV-Anteil (für den dargestellten Arbeitsbereich).

Zu b)

Ein geringer Stromanstieg (hier wichtig erreicht ohne zusätzliche Induktivität) bewirkt eine geringere Beschädigung der Lampenelektroden bis zum Erreichen der vollständigen Plasmaausdehnung. Ein vergleichbarer Effekt könnte durch die Erhöhung der Induktivität erzielt werden, allerdings vergrößert sich dadurch die Pulszeit. Dies führt zu einem geringerem Peakstromk.

Zu c)

Bei vollständiger Entladung der Kondensatoren der Primärschaltung wird die gesamte gespeicherte Energie genutzt.

Zu d)

Kürzere Pulszeiten sind für bestimmte Anwendungen Vorteilhaft und erhöhen zudem die Oberflächentemperatur auf dem Substrat (bei gleicher Energie), bzw. kann die Energie reduziert werden (Energieersparnis).

Die Erweiterung durch die Sekundärschaltung ist besonders vorteilhaft im Fall erhöhter Lampenimpedanz $K > 20$. Dieser Wert wird im Fall optimaler Lampenparameter bei einer Lampenlänge größer 200mm erreicht. Der gleiche Zusammenhang ist wirksam bei der Reihenschaltung mehrerer Lampen, welche beispielsweise geometrisch parallel angeordnet werden, um größere Flächen abzudecken.

In einer weiteren Ausgestaltung der Erfindung wird ein nicht näher dargestellter zusätzlicher Thyristor integriert, um den Zeitpunkt des Entladevorgangs von Kondensator 8 zu bestimmen (bisher nur Diode). Mit dem zusätzlichen Thyristor kann die zwischengespeicherte Energie zeitlich gezielt zur optimalen Pulsformung dem Lampenplasma zugeführt werden.

**Bezugszeichenliste**

| 1 | Blitzlampe |
|---|---|
| 2 | Elektrode |
| 3 | Elektrode |
| 4 | Zündelektrode |
| 5 | Vorspannungsquelle |
| 6 | Plasmaspannungsquelle |
| 7 | Hauptspannungsquelle |
| 8 | erster Kondensator |
| 9 | erste Ladeeinheit |
| 10 | erste Induktivität |
| 11 | zweiter Kondensator |
| 12 | zweite Ladeeinheit |
| 13 | erste Diode |
| 14 | zweite Diode |
| 15 | Zündspannungsgenerator |
| 16 | Steuersystem |
| 17 | dritter Kondensator |
| 18 | dritte Ladeeinheit |
| 19 | zweite Induktivität |
| 20 | Thyristor |
| 21 | dritte Diode |
| 22 | Schalter |
| 23 | Schalter |
| 24 | Schalter |
| 25 | Vorpuls |
| 26 | Zündpuls |
| 27 | Hauptpuls |
| 28 | Addition |
| 29 | vierter Kondensator |
| 30 | zweiter Thyristor |
| 31 | vierte Diode |
| 32 | fünfte Diode |
| 33 | sechste Diode |
| 34 | Sekundärschaltung |
| 35 | Spule |

**Patentansprüche**

1. Verfahren zur Blitzlampensteuerung welches durch Anlegen einer Elektrodenspannung zwischen die Elektroden (2;3) einer Blitzlampe (1) ein einen Blitz erzeugender Hauptpuls (27) des Lampenstromes IL bewirkt und vor der Blitzerzeugung ein Vorpuls (25) des Lampenstromes IL durch Anlegen einer Vorspannung erzeugt, **dadurch gekennzeichnet, dass** der Vorpuls (25) dadurch erzeugt wird, dass ein Zündpuls durch eine zur Vorspannung höhere Plasmaspannung als Elektrodenspannung während einer Entladung eines die Plasmaspannung bereitstellenden zweiten Kondensators (11) angelegt wird und durch Zündung mittels einer Zündelektrode (4) ein Plasma in der Blitzlampe (1) gezündet und mittels der Vorspannung aus einem ersten Kondensator (8) während des Vorpulses (25) gehalten wird, wobei die Kapazität ($C_2$) des zweiten Kondensators (11) mindestens um eine Größenordnung geringer ist ($C_2 << C_1$) als die Kapazität (C1) des ersten Kondensators (8).

2. Verfahren nach Anspruch 1, **dadurch gekennzeichnet,**

   - **dass** die Vorspannung aus einer Vorspannungsquelle (5) mit dem ersten Kondensator (8) als Elektrodenspannung angelegt wird,
   - **dass** parallel zu der Vorspannung, jedoch zur Vorspannungsquelle (5) entkoppelt, als zusätzliche Elektrodenspannung die Plasmaspannung aus einer Plasmaspannungsquelle (6) mit dem zweiten Kondensator (11) angelegt wird
   - **dass** der Vorpuls (25) erzeugt wird, indem an die Zündelektrode (4) eine den mit der Plasmaspannung erzeugten Zündpuls (26) bewirkende Zündspannung angelegt wird, wobei durch die Plasmaspannung ein Durchbruch bewirkt und durch die Vorspannung gehalten wird.

3. Verfahren nach Anspruch 1, **dadurch gekennzeichnet, dass** mittels einer parallel zur Vorspannungsquelle (5) und Plasmaspannungsquelle (6) jedoch von diesen trennbare Hauptspannungsquelle (7) eine Hauptspannung als Elektrodenspannung zur Erzeugung des Hauptpulses (27) angelegt wird.

4. Verfahren nach Anspruch 2, **dadurch gekennzeichnet, dass** die Hauptspannungsquelle (7) während des Vorpulses (25) von den Elektroden (2; 3) getrennt und nur während Hauptpulses (27) mit den Elektroden (2;3) verbunden wird.

5. Anordnung zur Blitzlampensteuerung aufweisend

   - eine Blitzlampe (1), mit zwei Elektroden (2; 3) wobei eine Elektrodenspannung zwischen den Elektroden (2; 3) anlegbar ist,
   - eine Hautspannungsquelle (7),
   - eine Vorspannungsquelle (5),
   - eine Plasmaspannungsquelle (6),
   - ein Steuersystem (16) und
   - eine Zündelektrode (4) die mit einem Zündspannungsgenerator (15) verbunden ist, welcher durch das Steuersystem (16) steuerbar ist;
   - wobei die Vorspannungsquelle (5) und die Plasmaspannungsquelle (6) parallel geschaltet sind und jeweils in Flussrichtung eines zur Blitzlampe fließenden Lampenstroms ($I_L$) gepolte Dioden (13; 14), zur Entkopplung der Vorspannungsquelle (5) und der Plasmaspannungsquelle (6) aufweisen,

- wobei die Vorspannungsquelle (5) einen ersten Kondensator (8) und die Plasmaspannungsquelle (6) einen zweiten Kondensator (11) aufweist,

- wobei die Kapazität ($C_2$) des zweiten Kondensators (11) mindestens um eine Größenordnung geringer ist ($C_2 \ll C_1$) als die Kapazität ($C_1$) des ersten Kondensators (8) ;

- wobei die Vorspannungsquelle (5) ausgestaltet ist eine Vorspannung als Elektrodenspannung zu erzeugen;

- wobei die Plasmaspannungsquelle (6) ausgestaltet ist eine Plasmaspannung als Elektrodenspannung welche höher ist als die Vorspannung zu erzeugen;

- wobei die Hauptspannungsquelle (7) ausgestaltet ist eine Hauptspannung als Elektrodenspannung zu erzeugen;

- und wobei die Hauptspannungsquelle (7) über einen Thyristor (20) und einer dritten Diode (21) trennbar mit den zwei Elektroden (2; 3) verbunden ist;

- wobei die Anordnung dazu ausgestaltet ist,

    - einen Zündpuls des Lampenstroms ($I_L$),
    - einen Vorpuls des Lampenstroms ($I_L$) und
    - einen Hauptpuls des Lampenstroms ($I_L$) als Blitz zu erzeugen;
    - die Plasmaspannung als die Elektrodenspannung anzulegen;
    - den Zündpuls durch die als Elektrodenspannung angelegte Plasmaspannung und durch Zünden mittels der Zündelektrode zu erzeugen, wobei der zweite Kondensator (11) während des Zündpulses entladen wird; und
    - die Vorspannung als die Elektrodenspannung anzulegen, wobei mittels des ersten Kondensators (8) während des Vorpulses der Lampenstrom ($I_L$) fließt, wobei das in der Blitzlampe (1) mit dem Zünden der Zündelektrode (4) entzündete Plasma mittels der angelegten Vorspannung gehalten wird; und
    - durch Schalten des Thyristors (20) die den Hauptpuls erzeugende Hauptspannung als die Elektrodenspannung anzulegen.

6. Anordnung nach Anspruch 5, **dadurch gekennzeichnet, dass**

    - der erste Kondensator (8) mit einer den ersten Kondensator (8) aufladenden ersten Ladeeinheit (9) verbunden ist,
    - dass der zweite Kondensator (11) mit einer den zweiten Kondensator (11) aufladenden zweiten Ladeeinheit (12) verbunden ist.

7. Anordnung nach Anspruch 5 oder 6, **dadurch gekennzeichnet, dass** die Hauptspannungsquelle (7) einen dritten Kondensator (17) aufweist, der mit einer den dritten Kondensator (17) aufladenden dritten Ladeeinheit (18) verbunden ist

8. Anordnung nach einem der Ansprüche 6 oder 7, **dadurch gekennzeichnet, dass** mindestens eine der Ladeeinheiten (9; 12; 18) mit dem Steuersystem (16) durch dieses steuerbar verbunden ist.

**Claims**

1. Method for flash lamp control which, by applying an electrode voltage between the electrodes (2;3) of a flash lamp (1), causes a main pulse (27) of the lamp current IL, which main pulse generates a flash, and generates a pre-pulse (25) of the lamp current IL before the flash generation by applying a bias voltage, **characterized in that** the pre-pulse (25) is generated by applying an ignition pulse through a plasma voltage higher than the bias voltage, as the electrode voltage, during a discharge of a second capacitor (11) providing the plasma voltage, and by ignition via an ignition electrode (4) a plasma is ignited in the flash lamp (1) and maintained by the bias voltage from a first capacitor (8) during the prepulse (25), the capacitance ($C_2$) of the second capacitor (11) being at least one order of magnitude smaller ($C_2 \ll C_1$) than the capacitance (C1) of the first capacitor (8).

2. Method according to claim 1, **characterized**

    - **in that** the bias voltage from a bias voltage source (5) is applied with the first capacitor (8) as the electrode voltage,
    - **in that,** in parallel to the bias voltage, but decoupled from the bias voltage source (5), the plasma voltage from a plasma voltage source (6) is applied with the second capacitor (11) as an additional electrode voltage
    - **in that** the pre-pulse (25) is generated by applying an ignition voltage to the ignition electrode (4) which causes the ignition pulse (26) generated by the plasma voltage, a breakdown being caused by the plasma voltage and being maintained by the bias voltage.

3. Method according to claim 1, **characterized in that** by means of a main voltage source (7) connected in parallel to the bias voltage source (5) and plasma voltage source (6), but separable from these, a main voltage is applied as an electrode voltage to generate the main pulse (27).

**4.** Method according to claim 2, **characterized in that** the main voltage source (7) is disconnected from the electrodes (2; 3) during the pre-pulse (25) and is connected to the electrodes (2;3) only during the main pulse (27).

**5.** Arrangement for flash lamp control comprising

- a flash lamp (1), having two electrodes (2; 3) wherein an electrode voltage can be applied between the electrodes (2; 3),
- a main voltage source (7),
- a bias voltage source (5),
- a plasma voltage source (6),
- a control system (16) and
- an ignition electrode (4) which is connected to an ignition voltage generator (15) which is controllable by the control system (16);
- wherein the bias voltage source (5) and the plasma voltage source (6) are connected in parallel and each have polarized diodes (13; 14) in the direction of flow of a lamp current ($I_L$) flowing to the flash lamp, for decoupling the bias voltage source (5) and the plasma voltage source (6),
- wherein the bias voltage source (5) has a first capacitor (8) and the plasma voltage source (6) has a second capacitor (11),
- wherein the capacitance ($C_2$) of the second capacitor (11) is at least one order of magnitude smaller ($C_2 \ll C_1$) than the capacitance ($C_1$) of the first capacitor (8) ;
- wherein the bias voltage source (5) is designed to generate a bias voltage as an electrode voltage;
- wherein the plasma voltage source (6) is designed to generate a plasma voltage as an electrode voltage which is higher than the bias voltage;
- wherein the main voltage source (7) is designed to generate a main voltage as an electrode voltage;
- and wherein the main voltage source (7) is separably connected to the two electrodes (2; 3) via a thyristor (20) and a third diode (21);
- wherein the arrangement is designed to generate
- an ignition pulse of the lamp current ($I_L$),
- a pre-pulse of the lamp current ($I_L$) and
- a main pulse of the lamp current ($I_L$) as a flash;
- to apply the plasma voltage as the electrode voltage;
- to generate the ignition pulse by means of the plasma voltage applied as electrode voltage and by ignition via the ignition electrode, wherein the second capacitor (11) is discharged during the ignition pulse; and
- to apply the bias voltage as the electrode voltage, wherein the lamp current ($I_L$) flows by means of the first capacitor (8) during the pre-pulse, wherein the plasma ignited in the flash lamp (1) by the ignition of the ignition electrode (4) is maintained by means of the applied bias voltage; and
- to apply the main voltage generating the main pulse as the electrode voltage by switching the thyristor (20).

**6.** Arrangement according to claim 5, **characterized in that**

- the first capacitor (8) is connected to a first charging unit (9) that charges the first capacitor (8),
- **in that** the second capacitor (11) is connected to a second charging unit (12) that charges the second capacitor (11).

**7.** Arrangement according to claim 5 or 6, **characterized in that** the main voltage source (7) has a third capacitor (17) which is connected to a third charging unit (18) that charges the third capacitor (17).

**8.** Arrangement according to one of claims 6 or 7, **characterized in that** at least one of the charging units (9; 12; 18) is connected to the control system (16) in a way that allows it to be controlled.

**Revendications**

**1.** Procédé pour la commande de lampe à éclairs qui, par application d'une tension d'électrode entre les électrodes (2 ; 3) d'une lampe à éclairs (1), provoque une impulsion principale (27) du courant de lampe IL générant un éclair et, avant la génération d'éclairs, une pré-impulsion (25) du courant de lampe IL est générée par application d'une tension de polarisation, **caractérisé en ce que** la pré-impulsion (25) est générée de sorte qu'une impulsion d'amorçage est appliquée par une tension de plasma supérieure à la tension de polarisation sous forme de tension d'électrode pendant une décharge d'un deuxième condensateur (11) fournissant la tension de plasma et de sorte qu'un plasma est amorcé dans la lampe à éclairs (1) par amorçage au moyen d'une électrode d'amorçage (4) et est maintenu au moyen de la tension de polarisation provenant d'un premier condensateur (8) pendant la pré-impulsion (25), dans lequel la capacité ($C_2$) du deuxième condensateur (11) est inférieure d'au moins un ordre de grandeur ($C_2 \ll C_1$) à la capacité ($C_1$) du premier condensateur (8).

**2.** Procédé selon la revendication 1, **caractérisé en ce**

- **que** la tension de polarisation est appliquée à partir d'une source de tension de polarisation (5) avec le premier condensateur (8) sous forme de tension d'électrode,
- **que,** parallèlement à la tension de polarisation, mais de manière découplée par rapport à la source de tension de polarisation (5), la tension de plasma est appliquée à partir d'une source de tension de plasma (6) avec le deuxième condensateur (11) sous forme de tension d'électrode supplémentaire,
- **que** la pré-impulsion (25) est générée en appliquant à l'électrode d'amorçage (4) une tension d'amorçage provoquant l'impulsion d'amorçage (26) générée par la tension de plasma, dans lequel une décharge disruptive est provoquée par la tension de plasma et est maintenue par la tension de polarisation.

3. Procédé selon la revendication 1, **caractérisé en ce que,** au moyen d'une source de tension principale (7) parallèle à la source de tension de polarisation (5) et à la source de tension de plasma (6), mais pouvant être séparée de celles-ci, une tension principale est appliquée sous forme de tension d'électrode pour la génération de l'impulsion principale (27).

4. Procédé selon la revendication 2, **caractérisé en ce que** la source de tension principale (7) est séparée des électrodes (2 ; 3) pendant la pré-impulsion (25) et est connectée aux électrodes (2 ; 3) uniquement pendant l'impulsion principale (27).

5. Agencement pour la commande de lampe à éclairs présentant

   - une lampe à éclairs (1), comportant deux électrodes (2 ; 3), dans lequel une tension d'électrode peut être appliquée entre les électrodes (2 ; 3),
   - une source de tension principale (7),
   - une source de tension de polarisation (5),
   - une source de tension de plasma (6),
   - un système de commande (16), et
   - une électrode d'amorçage (4) qui est connectée à un générateur de tension d'amorçage (15) qui peut être commandé par le système de commande (16) ;
   - dans lequel la source de tension de polarisation (5) et la source de tension de plasma (6) sont commutées en parallèle et présentent respectivement des diodes (13 ; 14) polarisées dans le sens de circulation d'un courant de lampe ($I_L$) circulant vers la lampe à éclairs pour le découplage de la source de tension de polarisation (5) et de la source de tension de plasma (6),
   - dans lequel la source de tension de polarisation (5) présente un premier condensateur (8) et la source de tension de plasma (6) présente un deuxième condensateur (11),
   - dans lequel la capacité ($C_2$) du deuxième condensateur (11) est inférieure d'au moins un ordre de grandeur ($C_2 \ll C_1$) à la capacité ($C_1$) du premier condensateur (8) ;
   - dans lequel la source de tension de polarisation (5) est configurée pour générer une tension de polarisation sous forme de tension d'électrode ;
   - dans lequel la source de tension de plasma (6) est configurée pour générer une tension de plasma sous forme de tension d'électrode qui est supérieure à la tension de polarisation ;
   - dans lequel la source de tension principale (7) est configurée pour générer une tension principale sous forme de tension d'électrode ;
   - et dans lequel la source de tension principale (7) est connectée de manière à pouvoir être séparée aux deux électrodes (2 ; 3) par l'intermédiaire d'un thyristor (20) et d'une troisième diode (21) ;
   - dans lequel l'agencement est configuré pour
   - générer une impulsion d'amorçage du courant de lampe ($I_L$),
   - une pré-impulsion du courant de lampe ($I_L$) et
   - une impulsion principale du courant de lampe ($I_L$) sous forme d'éclair ;
   - appliquer la tension de plasma sous forme de tension d'électrode ;
   - générer l'impulsion d'amorçage par la tension de plasma appliquée sous forme de tension d'électrode et par amorçage au moyen de l'électrode d'amorçage, dans lequel le deuxième condensateur (11) est déchargé pendant l'impulsion d'amorçage ; et
   - appliquer la tension de polarisation sous forme de tension d'électrode, dans lequel le courant de lampe ($I_L$) circule au moyen du premier condensateur (8) pendant la pré-impulsion, dans lequel le plasma amorcé dans la lampe à éclairs (1) avec l'amorçage de l'électrode d'amorçage (4) est maintenu au moyen de la tension de polarisation appliquée ; et
   - appliquer la tension principale générant l'impulsion principale sous forme de tension d'électrode en commutant le thyristor (20).

6. Agencement selon la revendication 5, **caractérisé en ce que**

   - le premier condensateur (8) est connecté à une première unité de charge (9) chargeant le premier condensateur (8),
   - **que** le deuxième condensateur (11) est connecté à une deuxième unité de charge (12) chargeant le deuxième condensateur (11).

7. Dispositif selon la revendication 5 ou 6, **caractérisé en ce que** la source de tension principale (7) présente un troisième condensateur (17) qui est connecté à une troisième unité de charge (18) chargeant le troisième condensateur (17).

8. Agencement selon l'une des revendications 6 ou 7, **caractérisé en ce qu'**au moins l'une des unités de charge (9 ; 12 ; 18) est connectée au système de commande (16) de manière à pouvoir être commandée par celui-ci.

FIG. 1
(Stand der Technik)

FIG. 2
(Stand der Technik)

# FIG. 3

FIG. 4

FIG. 5

# FIG 6

## FIG 7

## FIG 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4687971 A

- WO 2009095584 A


**In der Beschreibung aufgeführte Nicht-Patentliteratur**

- **MIT JIA ; SHENLI et al.** The Plasma Channel of Pulsed Flashlams Working in an Array. *Plasma Science and Technology*, vol. 15 (7)

- **ARTIKEL T. THRUM et al.** *Development of a Powerful Vortex Stabilized Water-Wall Flash Lamp for RTP Applications*, 2004